# EUROPÄISCHE PATENTSCHRIFT

(11) **EP 2 427 972 B1**
(45) Veröffentlichungstag und Bekanntmachung des Hinweises auf die Patenterteilung: **20.04.2016**
(21) Anmeldenummer: 10720577.5
(22) Anmeldetag: 05.05.2010
(51) Int. Cl.: H04B 7/185, H01Q 1/28

(54) **VERFAHREN ZUR GERICHTETEN DIGITALEN DATENÜBERTRAGUNG ZWISCHEN EINEM LUFTFAHRZEUG UND EINER BODENSTATION**
METHOD FOR DIRECTIONAL DIGITAL DATA COMMUNICATIONS BETWEEN AN AIRBORNE VEHICLE AND A GROUND STATION
PROCÉDÉ POUR COMUNICATIONS NUMERIQUÉS ET DIRECTIONELLES ENTRE UN VÉHICULE AÉRIEN ET UNE STATION SOL

(30) Priorität: 05.05.2009 DE 102009019995; 05.05.2009 US 175553 P
(43) Veröffentlichungstag der Anmeldung: 14.03.2012
(73) Patentinhaber: Airbus Operations GmbH, 21129 Hamburg (DE)
(72) Erfinder: FUSS, Tim, 22589 Hamburg (DE); SCHWARK, Uwe, 28870 Ottersberg (DE)
(74) Vertreter: Kopf Westenberger Wachenhausen Patentanwälte PartG mbB
(86) Internationale Anmeldenummer: PCT/EP2010/056109
(87) Internationale Veröffentlichungsnummer: WO 2010/128083

(56) Entgegenhaltungen:
- EP-A1- 2 131 443
- WO-A1-2007/011978
- US-A- 3 500 406
- US-A- 4 635 066
- US-A- 5 444 762
- US-A1- 2003 142 024
- US-A1- 2006 030 311
- US-B2- 8 786 492
- HIGGINS B: "PHONES IN THE AIR" ELEKTOR, CANTERBURY, GB, Bd. 17, Nr. 186, 1. Februar 1991 (1991-02-01), Seiten 20-22, XP000200098 ISSN: 0268-4519

## Beschreibung

### GEBIET DER ERFINDUNG

Die Erfindung betrifft die Bodenkommunikation von Luftfahrzeugen. Insbesondere betrifft die Erfindung ein Verfahren zur gerichteten digitalen Datenübertragung zwischen einem Luftfahrzeug und zumindest einer ersten Bodenstation, ein Luftfahrzeug mit einer digitalen Sendeeinheit zur gerichteten digitalen Datenübertragung zwischen einem Luftfahrzeug und einer Bodenstation, sowie ein Kommunikationssystem zur gerichteten digitalen Datenübertragung zwischen einem Luftfahrzeug und einer Bodenstation.

### TECHNOLOGISCHER HINTERGRUND

Bei den heutzutage eingesetzten Kommunikationssystemen, welche ein Flugzeug mit der Außenwelt zur Datenübertragung verbinden, werden rundstrahlende Antennen, sogenannte omni-direktionale Antennen, verwendet. Aufgrund des geringen Antennengewinns von solchen omni-direktionalen Antennen werden deutlich höhere Sendeleistungen sowohl für Sender, welche am Flugzeug platziert sind, als auch für Sender, welche am Boden platziert sind, benötigt.

Mit rundstrahlenden Antennen in oder an einem Flugzeug könnten die Aussendungen des Flugzeuges an anderen Bodenstationen als der versorgenden Bodenstation als Störungen wirken. Diese Störungen können zu einer stark herabgesetzten spektralen Effizienz des gesamten Kommunikationssystems führen. Gleiches kann auch in der Gegenrichtung eines solchen Kommunikationskanals gelten.

Weiterhin kommen in den bisherigen Kommunikationsnetzen zwischen Luftfahrzeugen und Bodenstationen hauptsächlich analoge Übertragungsverfahren zum Einsatz. In der Regel wird bei analogen Übertragungsverfahren ein Parameter eines Trägersignals durch ein analoges modulierendes Signal verändert z.B. Amplitude, Frequenz oder Phase. Jeder Amplituden- und Phasenwert ist dabei innerhalb eines definierten Wertebereiches zulässig und zu jedem Zeitpunkt relevant.

Rein analoge Signalübertragungsverfahren sind in der Regel anfällig gegenüber Störungen von außen, die beispielsweise durch Fremdsysteme verursacht werden oder gegenüber thermischem Rauschen, das jedem Übertragungssystem inhärent ist. Digitale Methoden erlauben hingegen eine deutlich robustere Übertragung durch die Möglichkeit von Fehlerschutz- bzw. Korrekturmaßnahmen z.B. durch Signalrekonstruktion, Entzerrung, oder Fehlerschutzkodierung.

Die Druckschriften DE 102005063077 und WO 2007074175 beschreiben eine Vorrichtung zur Aufzeichnung von digitalen Nachrichten, die mit Datenlinkgeräten zwischen einem Führer eines Flugzeugs und Personal am Boden ausgetauscht werden.

Die US 2006/0229103 A1 beschreibt ein Kommunikationssystem, bei welchem an einem Flugzeug eine einzige Antenne vorgesehen ist, die einen einzigen Strahl erzeugt, der unabhängig steuerbare, schmale Keulen aufweist. Eine derartige Anordnung mit einer einzigen Antenne ist sowohl aerodynamisch als auch in Bezug auf die Sende- und Empfangseigenschaften nachteilig. Die bekannte Antenne weist einen Array von sechs Antennenelementen auf, wobei sich die gesamte Antenne über einen Bereich von mindestens 50 cm von der Rumpfunterseite des Flugzeuges aus nach unten erstreckt. Bei einer Rollbewegung des Flugzeuges ist eine kleinere wirksame Antennenfläche der Bodenstation zugewandt.

In der WO 2007/011978 A1 wird ein System und eine Methode zur Implementierung weicher Hand-over Prozesse in ein Kommunikationssystem an Bord eines Flugzeugs beschrieben. Das System verwendet eine Antennen-Kontrolleinheit und ein Strahlformungsnetzwerk, das zwei unabhängig voneinander ausrichtbare Sendekeulen aus einem einzelnen Funkstrahl generiert. Der einzelne Funkstrahl wird von einem phasengesteuerten Antennenarray auf dem Flugzeug abgestrahlt.

Die US 2006/030311 beschreibt ein Hand-over Management System, das die Kommunikationskapazität, die terrestrische Luft-Boden Mobilfunknetze zur Verfügung stellen, vergrößert und das Leistungsvermögen von satellitengestützten Luft-Boden Kommunikationsnetzen sowie terrestrischen Mobilfunknetzen einbezieht. Durch den Einsatz von steuerbaren Antennen wird eine gerichtete Kommunikation ermöglicht.

Die US 5 444762 beschreibt eine Methode zur Reduktion der Interferenz zwischen Mobilfunksignalen, die zwischen einem Flugzeug und einer Bodenstation ausgetauscht werden, und Mobilfunksignalen eines bodengestützten Kommunikationssystems. Sowohl an Bord eines Flugzeugs als auch an einer Bodenstation ist dazu jeweils eine gerichtete Antenne vorgesehen. Zur Ausbildung einer gewünschten Strahlungscharakteristik der am Flugzeug befindlichen gerichteten Antenne können zwei Patchantennen verwendet werden, die beidseitig am Seitenleitwerk angebracht sind.

### ZUSAMMENFASSUNG DER ERFINDUNG

Es ist eine Aufgabe der Erfindung, eine verbesserte Datenübertragung zwischen einem Luftfahrzeug und einer Bodenstation anzugeben. Die Aufgabe wird durch die Gegenstände der unabhängigen Patentansprüche gelöst.

Es sind ein Verfahren zur gerichteten digitalen Datenübertragung zwischen einem Luftfahrzeug und zumindest einer ersten Bodenstation, ein Luftfahrzeug mit einer digitalen Sendeeinheit zur gerichteten digitalen Datenübertragung zwischen dem Luftfahrzeug und zumindest einer ersten Bodenstation, sowie ein Kommunikationssystem zur gerichteten digitalen Datenübertragung zwischen einem Luftfahrzeug und zumindest einer ersten Bodenstation gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Verfahren, das Luftfahrzeug und das Kommunikationssystem.

Es sei darauf hingewiesen, dass das Verfahren in der hier beschriebenen Reihenfolge der Verfahrensschritte ausgeführt werden kann. Aber auch jede beliebige andere Reihenfolge der Verfahrensschritte zur Durchführung des erfindungsgemäßen Verfahrens ist möglich.

Gemäß einem Ausführungsbeispiel der Erfindung ist ein Verfahren zur gerichteten digitalen Datenübertragung zwischen einem Luftfahrzeug und zumindest einer ersten Bodenstation mittels eines Boden-Luft-Direktfunksystems angegeben. Dabei weist das Verfahren die folgenden Schritte auf: Bereitstellen einer ersten Antenne für ein Luftfahrzeug und einer zweiten Antenne für eine erste Bodenstation, wobei zumindest eine der ersten und zweiten Antenne eine gerichtete Antenne ist. Dieses Ausführungsbeispiel weist weiterhin den Schritt Übermitteln digitaler Daten direkt zwischen dem Luftfahrzeug und der ersten Bodenstation auf.

Dabei sei explizit darauf hingewiesen, dass in diesem und jedem anderen Ausführungsbeispiel das Luftfahrzeug ein Flugzeug sein kann.

Dabei ist die gerichtete Antenne des Luftfahrzeuges in diesem und in jedem anderen Ausführungsbeispiel der Erfindung aufgrund ihrer körperlichen Ausgestaltung hinsichtlich ihrer Abstrahlcharakteristik elektromagnetischer Wellen räumlich gerichtet. Die gerichtete Antenne kann mehrere strahlende bzw. empfangende Antennenelemente aufweisen, welche mittels "Beam Forming und/oder Beam Steering"-Techniken von einer Kontrolleinheit im Luftfahrzeug angesteuert werden können, um ihre Sende-/Empfangskeule räumlich zu variieren und an gewünschte Parameter anzupassen. Dies wird später genauer erläutert werden. Dabei kann eine bevorzugte Hauptsende- bzw. Hauptempfangsrichtung der gerichteten Antenne an dem Luftfahrzeug zur direkten digitalen Boden-Luft Kommunikation eingestellt werden. Ebenso kann auch die relative Phase der Signale, welche die verschiedenen Antennenelemente antreiben, variiert werden, um eine gewünschte Sendekeule mit einer bevorzugten Hauptstrahlrichtung der gerichteten Antenne zu erreichen.

Mit anderen Worten ist die gerichtete Antenne eine Antenne mit ausgeprägter Richtwirkung.

Im Kontext der vorliegenden Erfindung werden die Begriffe "Beam Forming" und "Beam Steering" als Anpassung der Antennencharakteristik hinsichtlich der Form und der Richtung der Empfangs- und/oder Sendekeule der gerichteten Antenne verstanden.

Dabei können, falls gewünscht, auch Array-Antennen eingesetzt werden.

Weiterhin ist es für dieses und für jedes andere Ausführungsbeispiel der Erfindung möglich, dass die im Kontext der vorliegenden Erfindung beschriebenen Antennen des Luftfahrzeuges an oder in dem Luftfahrzeug angeordnet sind. Ebenso können Antennen von Bodenstationen an oder in der Bodenstation angeordnet sein.

Dabei kann mit diesem optimierten direkten digitalen Boden-Luft-Kommunikationssystem die gesamte Luftfahrzeugkommunikation inklusive sowohl der Passagierkommunikation, als auch der Cockpitkommunikation digital und direkt an den Boden übertragen werden, ohne auf einen Satelliten zurückgreifen zu müssen.

Aufgrund der Möglichkeit der Anpassung der Hauptstrahlrichtung einer solchen gerichteten Antenne kann die Kapazität dieses Boden-Luft-Direktfunksystems im zugewiesenen Spektrum deutlich erhöht werden. Dies kann sowohl die Versorgung verbessern als auch die Nutzungsgebühren für den Betreiber des Luftfahrzeuges im Vergleich zu satellitengebundener Kommunikation senken.

Es ist ebenso möglich, sowohl für das Luftfahrzeug als auch für die Bodenstation eine gerichtete Antenne bereitzustellen. Mit anderen Worten senden die Antennen an den Luftfahrzeugen und an den Bodenstationen zueinander Funksignale gerichtet aus, so dass die Störungen der Nutzung untereinander in beiden Übertragungsrichtungen reduziert werden.

Die zumindest eine gerichtete Antenne sendet nicht in alle räumlichen Richtungen aus, mit anderen Worten nicht isotrop, und hat somit einen Antennengewinn, der auch in Empfangsrichtung wirkt. Signale von Sendern außerhalb der Hauptstrahlrichtung werden hierdurch unterdrückt, und die Übertragungsstrecke gewinnt an Kapazität, da Störeinflüsse unterdrückt werden. Weiterhin können in einer Region mehrere Nutzer auf dieselbe, dem System zugewiesene Frequenz zugreifen. Dabei wird der Begriff "Nutzer" sowohl hier als auch im Kontext der gesamten vorliegenden Erfindung sowohl für die Luftfahrzeuge als auch für Bodenstationen verwendet.

Das Antennenkonzept der vorliegenden Erfindung mit gerichteten Antennen verbessert die Nutzung des zugeteilten Frequenz-Spektrums und reduziert ungewollte Störungen.

Es sei explizit darauf hingewiesen, dass in diesem sowie in jedem anderen Ausführungsbeispiel der Erfindung eine Vielzahl von Bodenstationen möglich ist, die untereinander vernetzt sind.

Hinsichtlich der digitalen Informations- und Datenübertragung sei auf folgendes hingewiesen: Verfahrensbedingt ist es bei der digitalen Informations- und Datenübertragung durch ausreichende Abschirmung der physikalischen Größe von der Außenwelt, die geeignete Wahl der Intervalle und den Einsatz Fehler korrigierender Codes möglich, die Wahrscheinlichkeit von Informationsverlusten zu Lasten der Übertragungsrate beliebig weit zu reduzieren. Dieser Vorteil der digitalen Datenübertragung gegenüber der analogen Datenübertragung wird vorteilhaft durch die vorliegende Erfindung genutzt. Mit anderen Worten kann eine sicherere Datenübertragung zwischen dem Luftfahrzeug und der ersten Bodenstation bereitgestellt werden.

Gemäß dieses Ausführungsbeispiels der Erfindung kann das im Luftfahrzeug verwendete Antennenkonzept die Nutzung von lateral und gerichteten Antennen, die beidseitig am Rumpf des Luftfahrzeuges montiert sind, umfassen. Im Falle eines Flugzeuges können die beiden lateral angeordneten Antennen vor oder hinter den Flügeln, den Belly Fairings, oder sogar an den Flügeln bzw. an Stabilisatoren selbst montiert werden, um Abschattung durch Flugzeugteile gering zu halten.

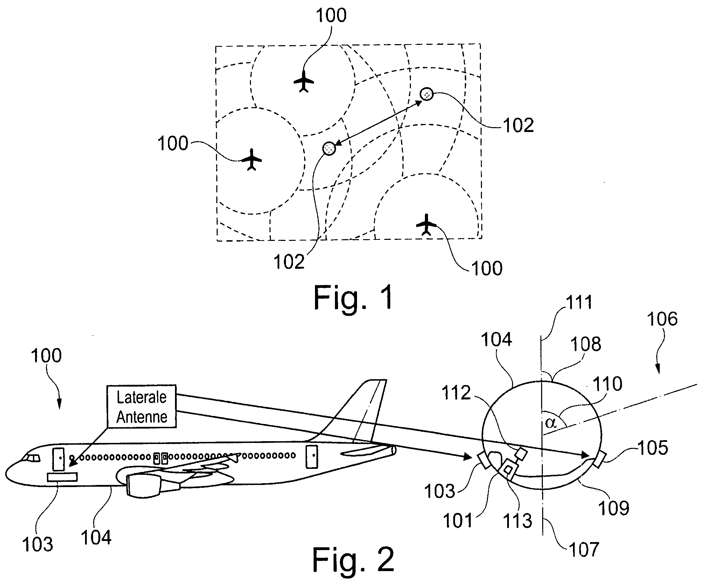

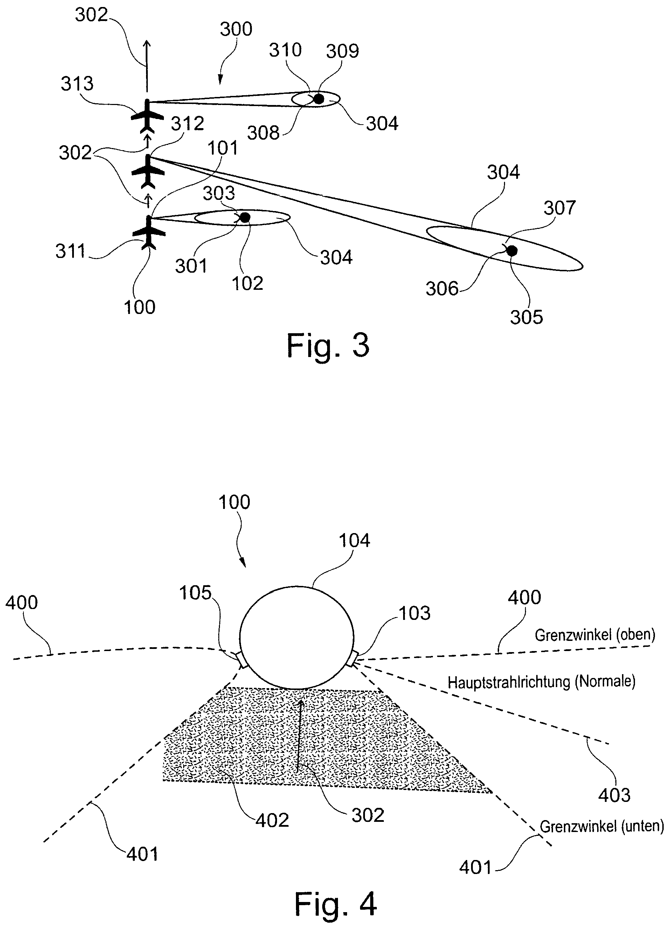

Dabei ist unter dem Begriff "lateral" eine Ortsangabe zu verstehen, welche Einbauorte für gerichtete Antennen beschreibt, die nicht mittig auf der Flugzeugquerachse liegen. Dies ist genauer an Hand der Figuren 2 und 4 beschrieben.

Weiterhin ist es möglich, mit diesem Verfahren die Antennen nach der relativen Nutzungshäufigkeit auszurichten. Da der Zugriff auf die erste Antenne und weitere Antennen am Luftfahrzeug meist mit einem kleinen Winkel zur Horizontalen erfolgt, sind diese Antennen entsprechend unter einem Winkel montiert und/oder nachjustiert, bei dem die Antennen gemäß der Nutzung die besten Eigenschaften besitzen.

Dabei kann die erste Antenne für ein Flugzeug beispielsweise eine Bauform aufweisen, welche ein Verhältnis der Länge zur Breite der Antenne aufweist, das größer als 1 ist. Mit anderen Worten können gerichtete Antennen in dem Verfahren verwendet werden, die relativ lang im Verhältnis zur Breite sind. Dies kann gewünscht sein, da die Sende-/Empfangskeule der Antenne in horizontaler Richtung schmal, in vertikaler Richtung aber breit sein darf. Dabei ergibt sich die Art der radialen Ausleuchtung aus dem Antennendesign in Bezug auf die Höhe und Breite der Antenne. Bei der angestrebten Einbaulage bei der die Längsachsen der Antenne sowie des Flugzeugs in dieselbe Richtung verlaufen hat die Breite der Antenne einen signifikanten, die Länge jedoch einen vernachlässigbaren Einfluss auf den zusätzlichen Luftwiderstand, den das System "Antenne" erzeugt.

Gemäß einem weiteren Ausführungsbeispiel der Erfindung weist das Verfahren den weiteren Schritt auf: Anpassen einer Sendekeule der gerichteten Antenne auf Basis zumindest einer der beiden Parameter Flugbahn des Luftfahrzeuges und Position der Bodenstation.

Dabei kann sowohl das Anpassen der Ausrichtung der Sendekeule als auch der Form der Sendekeule erfolgen .Dies gilt analog auch für die Empfangskeule der gerichteten Antenne.

Um die Positionsänderung des Luftfahrzeuges während des Fluges im Sinne der Qualität der Datenübertragung zu berücksichtigen, sieht das Verfahren den Einsatz von Algorithmen zur Steuerung der der Send-/Empfangskeule der gerichteten Antenne vor, damit die Hauptstrahlrichtungen der ersten Antenne des Luftfahrzeuges auf die erste Bodenstation ausgerichtet ist bzw. bleibt und / oder damit die Hauptstrahlrichtungen der zweiten Antenne der ersten Bodenstation auf das Luftfahrzeug ausgerichtet ist bzw. bleibt.

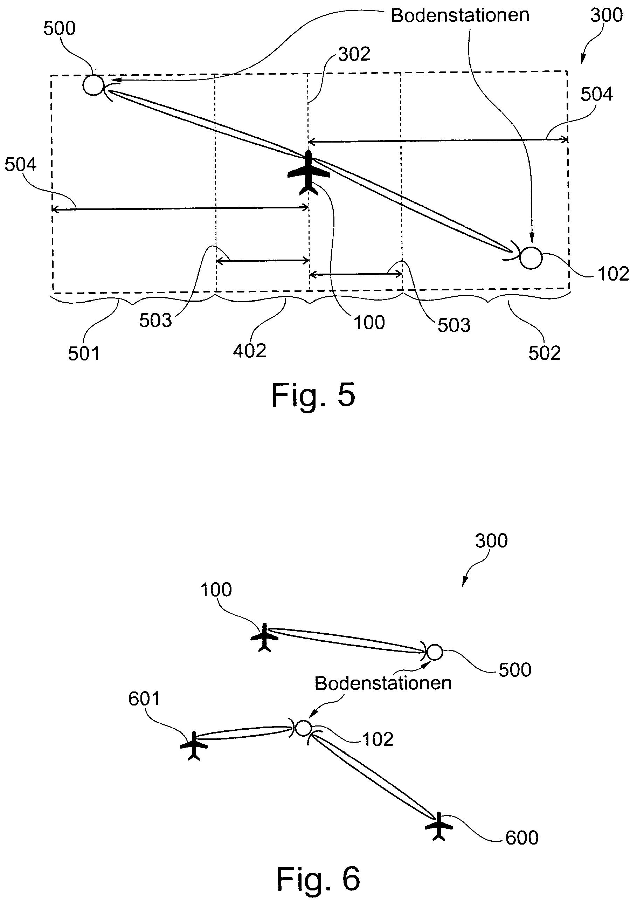

Weiterhin ermöglicht das erfindungsgemäße Verfahren einen Synergieeffekt zwischen einerseits der Verwendung von gerichteten Antennen und der Auswahl eines ganz bestimmten Bereichs, der durch die lateral am Rumpf des Luftfahrzeuges befindlichen Antennen ausgeleuchtet wird: Mittels des angegebenen Verfahrens ist es möglich, den Boden mit den gerichteten Antennen des Flugzeuges derart auszuleuchten, dass ein vordefinierter Bereich direkt unterhalb des Luftfahrzeuges am Boden nicht ausgeleuchtet wird. Mit anderen Worten wird nur ein Bereich zwischen x km (Nahposition) und y km (Fernposition) seitlich von der Flugbahn des Luftfahrzeuges ausgeleuchtet, was in der folgenden Figur 4 und 5 detaillierter beschrieben wird. Hierüber ist sichergestellt, dass Funkzellen oder Bodenstationen, welche direkt überflogen werden oder sich in unmittelbarer Nähe zur Flugbahn befinden, nicht von den gerichteten Antennen des Luftfahrzeuges erfasst werden, somit nicht zur versorgenden Bodenstation werden. Es werden nur solche Bodenstationen empfangen, welchen einen Mindestabstand quer zur Flugbahn des Luftfahrzeuges aufweisen. Dieser Mindestabstand kann in einem weiteren Verfahrensschritt bestimmt und die Sende-/Empfangskeule der ersten und / oder weiterer gerichteter Antennen an dem Luftfahrzeug daraufhin angepasst werden.

Dies hat den Vorteil, dass die Winkeländerungsgeschwindigkeit bei der horizontalen Verfolgung des Luftfahrzeuges durch die Sende-/Empfangskeule der zweiten Antenne der ersten Bodenstation einen bestimmten Maximalwert nicht überschreitet. Dieses besondere Merkmal des Verfahrens hat nun wiederum den vorteilhaften Effekt, dass vereinfachte "Beam Steering" und oder "Beam Forming"-Mechanismen für die erste Bodenstation ermöglicht werden.

Weiterhin wird die maximal auftretende Dopplerfrequenzverschiebung limitiert, da das Luftfahrzeug niemals direkt auf die versorgenden Zellen, also die erste Bodenstation und eventuell auch weitere Bodenstationen zufliegt bzw. sich von ihr entfernen kann.

Aufgrund der Anpassung der Hauptstrahlrichtung der gerichteten Antenne kann die Kapazität dieses Boden-Luft-Direktfunksystems im zugewiesenen Spektrum deutlich erhöht werden. Dies verbessert die Versorgung und senkt die Nutzungsgebühren im Vergleich zu satellitengebundenen Systemen.

Dabei ist es möglich, dass das Anpassen der Sende-/Empfangskeule der gerichteten Antenne von einer Kontrolleinheit ausgeführt wird. Im Falle, dass die gerichtete Antenne an dem Luftfahrzeug angeordnet ist, befindet sich die Kontrolleinheit ebenfalls in dem Luftfahrzeug. Sollte die gerichtete Antenne an der ersten Bodenstation angeordnet sein, so ist die Kontrolleinheit in der ersten Bodenstation angeordnet.

Weiterhin kann dieses Ausführungsbeispiel ebenso aufweisen: fortlaufendes Messen einer Veränderung einer Stärke eines von der gerichteten Antenne empfangenen Signals während des Fluges des Luftfahrzeuges, wobei die Anpassung der Sende-/Empfangskeule auf Basis der gemessenen Veränderung des Signals erfolgt.

Ebenso sei explizit darauf hingewiesen, dass in diesem und jedem anderen Ausführungsbeispiel der Erfindung der Begriff Sendekeule gleichbedeutend mit dem Begriff Antennenkeule verwendet wird. Es sei darauf hingewiesen, dass solch eine Sende-/Empfangskeule inhärent eine Hauptstrahlrichtung und einen oberen und unteren Grenzwinkel der Emission elektromagnetischer Wellen aufweist.

Zusätzlich ist ein Verfahrensschritt möglich, der das Ausgleichen einer Rollbewegung des Luftfahrzeuges mittels Beam steering und/oder Beam Forming Methoden betrifft.

Gemäß einem weiteren Ausführungsbeispiel der Erfindung wird das Anpassen der Sende-/Empfangskeule mittels eines Algorithmus ausgeführt, wobei das Anpassen auf Basis zumindest eines Parameters erfolgt, der ausgewählt ist aus der Gruppe bestehend aus Fluggeschwindigkeit des Luftfahrzeuges, Einfluss zumindest einer Dopplerverschiebung, Signalverluste, Interferenzen zwischen verschiedenen Teilnehmern in dem Funksystem, und verfügbare Bandbreite.

Dabei können andere Teilnehmer durch andere Luftfahrzeuge oder andere Bodenstationen dargestellt werden, die ebenso in dem Funknetz dieses Boden-Luft Direktfunksystems kommunizieren

Gemäß der Erfindung sind sowohl die erste als auch die zweite Antenne gerichtete Antennen. Weiterhin weist das Verfahren den folgenden Schritt auf: Anpassen einer Sendekeule der ersten und der dritten Antenne, wobei das Anpassen derart erfolgt, dass im Flug des Luftfahrzeuges sowohl eine Hauptstrahlrichtung der Antenne des Luftfahrzeuges auf die erste Bodenstation gerichtet bleibt und gleichzeitig eine Hauptstrahlrichtung der dritten Antenne der ersten Bodenstation auf das Luftfahrzeug gerichtet bleibt.

Mit anderen Worten senden die verwendeten beiden gerichteten Antennen zu jedem Zeitpunkt des Fluges in Richtung der gewünschten Bodenstation. Dabei kann auch bei einem Handover-Prozess die Sendekeule der ersten Antenne derart variiert werden, dass die Hauptstrahlrichtung dieser ersten gerichteten Antenne von der momentanen ersten Bodenstation zu der zweiten Bodenstation, zu welcher der Datenkanal mittels des Handovers hergestellt werden soll, geändert werden kann.

Dabei ist im Kontext der vorliegenden Erfindung der Begriff "Handover" verwendet, um den Vorgang in einem Kommunikationsnetz zu beschreiben, bei welchem ein Luftfahrzeug während dem Bestehen einer Datenverbindung von einer Funkzelle in eine nächste wechselt. Dabei werden die Funkzellen durch die Bodenstationen bereitgestellt. Dabei sei explizit darauf hingewiesen, dass auch der im amerikanischen Sprachgebrauch benutzte Begriff "Handoff" synonym dazu zu verstehen ist.

Gemäß einem weiteren Ausführungsbeispiel der Erfindung ist die gerichtete Antenne am Luftfahrzeug angeordnet und das Verfahren weist weiterhin die folgenden Schritte auf: räumliches Ausrichten der gerichteten Antenne an dem Luftfahrzeug, wobei das räumliche Ausrichten derart erfolgt, dass ein von einer Sendekeule der gerichteten Antenne nicht ausgeleuchteter Bereich entsteht, welcher sich entlang der Flugbahn des Luftfahrzeuges am Boden erstreckt.

Mit anderen Worten werden am Luftfahrzeug vorgesehene Antennen beidseitig und lateral am Rumpf des Luftfahrzeuges montiert. Dabei ist der vertikale Winkelbereich, welcher mit den Sendekeulen der Antennen abgedeckt wird, so mittels der Ausrichtung definiert, dass nur Bereiche ausgeleuchtet werden, welche nicht unmittelbar unterhalb des Luftfahrzeuges entlang der Flugbahn liegen. Mit anderen Worten wird nur derjenige Bereich von den gerichteten Antennen lateral von der Flugbahn am Boden ausgeleuchtet, der sich zwischen einer Nahposition und Fernposition abseits der Flugbahn erstreckt. Dies ist in den Figuren 4 und 5 verdeutlicht.

Hierüber kann mittels des Verfahrens sichergestellt werden, dass die Stationen, welche direkt vertikal überflogen werden, und die sich in unmittelbarem Abstand zur Projektion der Flugbahn auf dem Boden befinden, nicht zu versorgenden Bodenstation des Luftfahrzeuges werden. Somit werden von dem Luftfahrzeug lediglich Bodenstationen mit in dieses Boden-Luft-Direktfunksystem eingebunden, welche einen Mindestabstand quer zur Flugbahn aufweisen. Dies hat unter anderem den Vorteil, dass die Winkeländerungsgeschwindigkeit bei der horizontalen Verfolgung der Bodenstation durch das Flugzeug oder bei der horizontalen Verfolgung des Flugzeuges von der Bodenstation ein Maximalwert nicht überschritten wird. Diese Verfolgung wird in beiden Fällen mit der Anpassung und Nachjustierung der jeweiligen Sendekeule durchgeführt. Eine entsprechende Anpassung der Sendeleistung ist ebenfalls möglich.

Mit anderen Worten kann mittels der Auswahl und Festlegung des nicht ausgeleuchteten Bereiches bei der räumlichen Ausrichtung der gerichteten Antenne dieser maximale Winkeländerungsgeschwindigkeitswert festgelegt werden. Dies kann vorteilhafterweise zur Folge haben, dass einfache Mechanismen und Algorithmen für das Anpassen der Sendekeulen der gerichteten Antennen verwendet werden können.

Ein weiterer Vorteil dieses Ausführungsbeispiels ist die Begrenzung der maximal auftretenden Dopplerfrequenzverschiebung bei der digitalen Datenübertragung zwischen dem Luftfahrzeug und der ersten Bodenstation. Aufgrund der lateralen Anordnung der gerichteten Antennen an dem Luftfahrzeug und der räumlichen Ausrichtung der gerichteten Antennen derart, dass ein nicht ausgeleuchteter Bereich unterhalb des Luftfahrzeuges entsteht, wird erreicht, dass das Luftfahrzeug niemals direkt auf die versorgende Bodenstation zufliegt bzw. sich von ihr entfernen kann.

Weiterhin ist es möglich, dass ein Mechanismus die Bodenstation mit der besten Kombination aus Handover-Intervall, Dopplereinfluss, Signalverlust, Interferenzen zwischen verschiedenen Nutzern in dem Funksystem und verfügbarer Bandbreite auswählt. Mit anderen Worten kann ein Algorithmus in einem Speicher in dem Luftfahrzeug bereitgestellt werden, welcher aus den zuvor genannten Parametern berechnet, mit welcher Bodenstation zum aktuellen Zeitpunkt ein Datenkanal hergestellt bzw. aufrechterhalten werden soll.

Dabei kann das räumliche Ausrichten der gerichteten Antennen bei der Montage der gerichteten Antenne am Rumpf des Luftfahrzeuges erfolgen. Aber auch eine nachträgliche mechanische Justage der gerichteten Antenne mittels beispielsweise eines Stellwerkes während des Fluges ist zum räumlichen Ausrichten der gerichteten Antenne möglich.

Gemäß einem weiteren Ausführungsbeispiel der Erfindung ist die erste Antenne an einem Einbauort am Flugzeug angeordnet der ausgewählt ist aus der Gruppe bestehend aus lateral an einem Rumpf des Luftfahrzeuges, an einem Seitenleitwerk, an einem Höhenleitwerk, an einem Flügel, an einer Triebwerksgondel, und an einer Bauchverkleidung, die den Übergang zwischen einer Tragfläche und einem Rumpf des Luftfahrzeuges aerodynamisch verkleidet.

Dabei ist die Bauchverkleidung gleichbedeutend zu dem sogenannten Belly Fairing.

Für das Höhenleitwerk sind als Einbauort für die Antennen die äußeren Kanten des Höhenleitwerks möglich. Im Falle des Seitenleitwerkes ist es möglich die gerichtete Antenne auf den seitlichen Flächen des Seitenleitwerkes zu montieren oder im Leitwerkskörper selbst zu integrieren. Weiterhin können eine oder mehrere gerichtete Antennen lateral an dem Luftfahrzeug angeordnet sein.

Dabei kann in jedem Ausführungsbeispiel die räumliche Ausrichtung in Abhängigkeit der relativen Nutzungshäufigkeit gewählt werden.

Gemäß einem weiteren Ausführungsbeispiel der Erfindung weist das Verfahren weiterhin die folgenden Schritte auf: Empfangen eines Signals der ersten Bodenstation durch die erste Antenne, Empfangen eines weiteren Signals zumindest einer zweiten Bodenstation durch die erste Antenne und Auswählen einer der beiden Bodenstationen durch eine Auswahleinheit des Luftfahrzeuges für die Übertragung digitaler Daten auf Basis zumindest eines Parameters ausgewählt aus der Gruppe bestehend aus Handover-Intervall, Einfluss zumindest einer Dopplerverschiebung, Signalverluste, Interferenzen zwischen unterschiedlichen Nutzern des Funksystems und verfügbare Bandbreite.

Gemäß einem weiteren Ausführungsbeispiel der Erfindung ist ein Verfahren angegeben, welches den zusätzlichen Schritt aufweist: Ausführen eines Handovers zwischen der ersten Bodenstation und einer zweiten Bodenstation.

Gemäß einem weiteren Ausführungsbeispiel der Erfindung ist ein Luftfahrzeug mit einer digitalen Sendeeinheit (bzw. einer digitalen Sende-/ Empfangseinheit) zur gerichteten digitalen Datenübertragung zwischen dem im Flug befindlichen Luftfahrzeug und einer Bodenstation in einem Boden-Luft-Direktsystem angegeben. Dabei weist die digitale Sendeeinheit eine erste Antenne zum zumindest Abstrahlen von Signalen zur digitalen Datenübertragung direkt an die Bodenstation auf. Dabei ist die erste Antenne eine gerichtete Antenne, und ist die gerichtete Antenne ist zur Anbringung an einem Einbauort ausgeführt, der ausgewählt ist aus der Gruppe bestehend aus lateral an einem Rumpf des Luftfahrzeuges, an einem Seitenleitwerk, an einem Höhenleitwerk, an einem Flügel, an einer Triebwerksgondel, und an einer Bauchverkleidung, die den Übergang zwischen einer Tragfläche und einem Rumpf des Luftfahrzeuges aerodynamisch verkleidet.

Damit wird in diesem und jedem anderen Ausführungsbeispiel der Erfindung eine bidirektionale Datenübertragung zwischen dem Luftfahrzeug und einer oder mehrerer Bodenstationen ermöglicht.

Gemäß der Erfindung weist die digitale Sendeeinheit weiterhin eine zweite Antenne auf, welche als gerichtete Antenne ausgeführt ist. Dabei ist die zweite Antenne zur spiegelsymmetrischen Anbringung zur ersten Antenne im Hinblick auf eine rumpfmittige Spiegelachse ausgeführt.

Dieses Ausführungsbeispiel kann unter anderem der Fig. 2 entnommen werden.

Mit dieser Anordnung kann eine symmetrische Ausleuchtung der lateralen Bereiche rechts und links von der Flugbahn des Luftfahrzeugs erreicht werden. Aufgrund der gleichen räumlichen Ausrichtung der linken und rechten lateral angeordneten gerichteten Antennen am Luftfahrzeug und der daraus resultierenden gleichen unteren Grenzwinkel und oberen Grenzwinkel der jeweiligen Sendekeulen ist ein direkter Vergleich zwischen Bodenstationen, die von der rechten Antenne erfasst werden, und Bodenstationen, die von der linken Antenne erfasst werden, möglich. Somit kann eine verbesserte Auswahl derjenigen Bodenstationen gewährleistet werden, welche die beste Kombination aus Handover-Intervall, Einfluss einer Dopplerverschiebung, Signalverlusten, Interferenzen zwischen unterschiedlichen Nutzern des Funksystems und verfügbarer Bandbreite aufweist. Dies kann die Datenübertragung dem digitalen Boden-Luft-Direktfunksystem erheblich verbessern.

Gemäß einem weiteren Ausführungsbeispiel der Erfindung weist der Rumpf des Luftfahrzeuges einen himmelwärts gewandten Bereich und einen bodenwärts gewandten Bereich auf. Dabei ist die gerichtete Antenne unter einem Winkel α zu einer Flächennormalen des himmelwärts gewandten Bereichs hin an den Rumpf des Luftfahrzeuges angeordnet, welcher Winkel α ausgewählt aus der Gruppe bestehend aus 80° ≤ α ≤ 145°; 95° ≤ α ≤ 165°; 100° ≤ α ≤ 155°; 105° ≤ α ≤ 140°; 115° ≤ α ≤ 130°; 280° ≤ α ≤ 185°; 265° ≤ α ≤ 195°; 260° ≤ α ≤ 205°; 255° ≤ α ≤ 220°; und 245° ≤ α ≤ 230°.

Dabei ist eine Anordnung der gerichteten Antenne an dem Luftfahrzeug unter einem Winkel von 80° oder 280° möglich, um Rollbewegungen des Luftfahrzuges zu berücksichtigen beziehungsweise auszugleichen. Ein entsprechender Verfahrensschritt des Ausgleichens einer Rollbewegung des Luftfahrzeuges mittels Beam steering und /oder Beam Forming Methoden ist ebenso möglich.

Diese Anordnung der beiden spiegelsymmetrisch platzierten gerichteten Antennen an dem Luftfahrzeug stellt sicher, dass ein nicht ausgeleuchteter Bereich direkt unterhalb des Luftfahrzeuges entsteht. Dieser Bereich ist mit den Antennen nur noch bedingt ausleuchtbar, da der Winkel zu der Normalen der Antennen zu groß ist.

Gemäß einem weiteren Ausführungsbeispiel der Erfindung weist die digitale Sendeeinheit in dem Luftfahrzeug weiterhin eine elektrische Kontrolleinheit zur Anpassung einer Sendekeule einer ersten Antenne auf Basis einer Flugbahn des Luftfahrzeuges auf.

Mit anderen Worten ist die Kontrolleinheit in dem Luftfahrzeug in der Lage, selbstständig und autark einen Beam Steering Algorithmus auszuführen. Dadurch wird der Antennengewinn der gesetzten gerichteten Antenne durch das Beam Steering weiterhin erhöht. Signale von Sendern außerhalb der Hauptstrahlrichtung werden dadurch unterdrückt, die Übertragungsstrecke zwischen dem Luftfahrzeug und der Bodenstation gewinnt an Kapazität, da diese Störeinflüsse gerade unterdrückt werden. Zudem können in der Region mehrere Nutzer, also mehrere Luftfahrzeuge und / oder mehrere Bodenstationen auf dieselbe, dem Boden-Luft-Direktfunksystem zugewiesene Frequenz zugreifen. Dies kann neben einer verbesserten Datenverbindung auch reduzierte Kosten für die Betreiber des Luftfahrzeuges realisieren.

Gemäß einem weiteren Ausführungsbeispiel der Erfindung weist die digitale Sendeeinheit in dem Luftfahrzeug einen Speicher auf, wobei in dem Speicher zumindest ein erster Algorithmus gespeichert ist, mittels dessen die Kontrolleinheit die Anpassung der Sendekeule durchführt oder ein zweiter Algorithmus gespeichert ist, mittels dessen die Kontrolleinheit ein Handover durchführt.

Gemäß einem weiteren Ausführungsbeispiel der Erfindung ist ein Kommunikationssystem zur gerichteten digitalen Datenübertragung zwischen einem Luftfahrzeug und zumindest einer ersten Bodenstation gemäß Patentanspruch 15 ausgebildet.

Es sei explizit darauf hingewiesen, dass in dem Kommunikationssystem sowohl ein Vielzahl an Luftfahrzeugen als auch mehrere Bodenstationen gleichzeitig miteinander kommunizieren können.

Es kann als ein Kernaspekt der vorliegenden Erfindung betrachtet werden, dass neben einer digitalen Datenübertragung zwischen dem Luftfahrzeug und der Bodenstation die Datenübertragung stets gerichtet und direkt erfolgt, was die Kapazität im zugewiesenen Spektrum deutlich erhöhen kann. Dadurch kann eine verbesserte Versorgung des Luftfahrzeuges mit Daten bereitgestellt werden. Ebenso ist es möglich, die Nutzungsgebühren im Vergleich zur heutigen satellitengebundenen Datenübertragung zu reduzieren. Es kann als weiteren Kernaspekt der vorliegenden Erfindung betrachtet werden, dass die Ausstrahlung in den gerichteten Antennen des Luftfahrzeugs derart erfolgt, dass lediglich Bodenbereiche ausgeleuchtet oder bestrahlt werden, die im Hinblick auf die Flugbahn des Luftfahrzeuges eine geringe Winkeländerungsgeschwindigkeit und einen geringen Dopplerfrequenzversatz aufweisen. Daneben ist die Erfindung in der Lage, mittels eines Handovers kontinuierliche Datenübertragung für das Luftfahrzeug durch Vielzahl von Bodenstationen bereitzustellen. Dadurch kann es möglich sein, die benötigte Sendeleistung der jeweiligen Antennen zu reduzieren, was neben einer geringeren elektromagnetischen Strahlenbelastung, zu niedrigerem Energiebedarf im Flugzeug führen kann.

Weiterhin sei explizit darauf hingewiesen, dass sämtliche Ausführungsbeispiele der Erfindung auch die Kommunikation in der Situation betreffen, wenn sich das Luftfahrzeug am Boden befindet.

Weitere Ausführungsbeispiele und Vorteile der Erfindung ergeben sich aus der folgenden Figurenbeschreibung.

Die Darstellungen in den Figuren sind schematisch und nicht maßstäblich.

### KURZE BESCHREIBUNG DER FIGUREN

Fig. 1 zeigt ein Beispiel des Standes der Technik zur Datenübertragung für Flugzeuge.
Fig. 2 zeigt eine schematische, zweidimensionale Darstellung eines Flugzeuges gemäß einem Ausführungsbeispiel der Erfindung.
Fig. 3 zeigt eine schematische, zweidimensionale Darstellung eines Kommunikationssystems gemäß einem Ausführungsbeispiel der Erfindung.
Fig. 4 zeigt eine schematische, zweidimensionale Darstellung eines Querschnitts eines Flugzeuges gemäß einem Ausführungsbeispiel der Erfindung.
Fig. 5 zeigt eine schematische, zweidimensionale Darstellung eines Kommunikationssystems gemäß einem Ausführungsbeispiel der Erfindung.
Fig. 6 zeigt eine schematische, zweidimensionale Darstellung eines Kommunikationssystems gemäß einem Ausführungsbeispiel der Erfindung.
Fig.7 zeigt ein Flugzeug mit möglichen Einbauorten für eine gerichtete Antenne gemäß einem Ausführungsbeispiel der Erfindung.
Fig. 8 zeigt ein Flussdiagramm eines Verfahrens gemäß einem Ausführungsbeispiel der Erfindung.

Im Folgenden werden mit Verweis auf die Figuren bevorzugte Ausführungsbeispiele der vorliegenden Erfindung beschrieben.

In der folgenden Figurenbeschreibung werden für die gleichen oder ähnlichen Elemente die gleichen Bezugsziffern verwendet.

### DETAILLIERTE BESCHREIBUNG VON AUSFÜHRUNGSBEISPIELEN

Fig. 1 zeigt ein Beispiel aus dem Stand der Technik, in welchem mittels Isotropstrahlern analog Daten von Flugzeugen 100 an Bodenstationen 102 gesendet werden.

Fig. 2 zeigt ein Ausführungsbeispiel der vorliegenden Erfindung. Dort ist ein Luftfahrzeug gezeigt, welches als Flugzeug 100 ausgeführt ist und welches lateral oder seitlich am Rumpf 104 eine erste gerichtete Antenne 103 aufweist. Dabei ist in dem rechten Teil der Fig. 2 ein Querschnitt des Rumpfes 104 gezeigt, in welcher Darstellung sich erkennen lässt, dass an dem Flugzeugrumpf spiegelsymmetrisch zur rumpfmittigen Spiegelachse 107 die erste Antenne 103 und die zweite Antenne 105 angeordnet sind, welche als gerichtete Antennen ausgeführt sind.

Weiterhin ist der himmelwärts gewandte Bereich 108 des Rumpfes und der bodenwärts gewandte Bereich 109 des Rumpfes dargestellt. Weiterhin ist der Winkel "α" 110 gezeigt. Die Flächennormale 111 des himmelwärts gewandten Bereichs 108 ist ebenso dargestellt in Fig. 1. Weiterhin ist die digitale Sendeeinheit 101 gezeigt, welche mit der ersten Antenne 103 und der zweiten Antenne 105 elektrisch verbunden ist. Damit kann eine gerichtete digitale Datenübertragung zwischen dem im Flug befindlichen Luftfahrzeug und einer ersten Bodenstation (nicht gezeigt) in einem Boden-Luft-Direktfunksystem bereitgestellt werden.

Je nach Flugzeugtyp können die Antennen 103 und 105 vor oder hinter den Flügeln oder sogar an den Flügeln oder Stabilisatoren selbst montiert werden, um die Abschattung durch Flugzeugteile gering zu halten.

Dabei ist dem rechten Teil der Fig. 2 zu entnehmen, dass die erste Antenne 103 unter einem Winkel "α" an dem Rumpfäußeren angeordnet ist, welcher ca. 260° beträgt. Die zweite Antenne 105 hingegen ist unter einem Winkel "α" angeordnet, welcher ca. 100° beträgt.

Da die beiden Antennen 103 und 105 gerichtete Antennen sind, senden sie nicht in alle Raumrichtungen elektromagnetische Strahlung aus und haben somit einen Antennengewinn, der auch in Empfangsrichtung wirkt. Somit werden vorteilhafterweise Signale von Sendern, die außerhalb der Hauptstrahlrichtung der beiden Antennen liegen, unterdrückt, wodurch die Übertragungsstrecke zur Bodenstation an Kapazität gewinnt. Es sei explizit darauf hingewiesen, dass auch eine Pluralität von Luftfahrzeugen die Bodenstationen auf dieselbe, dem System zugewiesene Frequenz zugreifen können.

Fig. 3 zeigt ein Kommunikationssystem 300 zur gerichteten digitalen Datenübertragung zwischen einem Luftfahrzeug 100 und einer ersten Bodenstation 102. Dabei ist eine erste digitale Sendeeinheit 101 an dem Luftfahrzeug und eine zweite digitale Sendeeinheit 301 an der ersten Bodenstation gezeigt. Die erste digitale Sendeeinheit weist eine erste Antenne 103 (nicht gezeigt) auf und die zweite digitale Sendeeinheit weist eine dritte Antenne 303 auf. Dabei ist die erste Antenne 103 als gerichtete Antenne ausgeführt. Die dritte Antenne 303 kann als Isotropstrahler ausgeführt sein, was eine Kombination aus einem omni-direktionalen Strahler und einer gerichteten Antenne möglich macht. Es könne aber auch beide als gerichtete Antennen ausgeführt sein. Weiterhin sind die digitalen Sendeeinheiten zum Übermitteln digitaler Daten direkt zwischen dem Luftfahrzeug und der ersten Bodenstation ausgeführt.

Dabei ist weiterhin in Fig. 3 zu sehen, dass mittels der Anpassung der Sendekeule 304 der ersten Antenne eine optimale Fern- und Nahbereichsausleuchtung erfolgen kann. Dabei sind drei verschiedene Zustände 311, 312, 313 des Luftfahrzeuges entlang der Flugbahn 302 dargestellt, in welchen neben der ersten Bodenstation die weiteren Bodenstationen 305 und 308 von der digitalen Sendeeinheit 101 in dem Luftfahrzeug angestrahlt und entsprechend digitale Daten ausgetauscht werden. Dabei geschieht ein sogenannter Handover zwischen den drei verschiedenen Zuständen des Luftfahrzeuges 100. Mit anderen Worten ist der Fig. 3 ein Anpassen der Sendekeule durch eine Kontrolleinheit (nicht gezeigt) dargestellt, welche dafür sorgt, dass die Hauptstrahlrichtung der Antenne 103 jeweils auf die aktuelle Bodenstation, 102, 305 oder 308 ausgerichtet ist. Ebenso kann in der jeweiligen Bodenstation solch ein Beam Steering Verfahren angewendet werden, so dass die Antennenkeule der jeweiligen Antenne (303, 307 oder 310) der Bodenstation auf das Luftfahrzeug 100 ausgerichtet bleibt.

Dabei kann Fig. 3 entnommen werden, dass die Sende und /oder die Empfangskeule einer gerichteten Antenne, die dieses digitalen Datenübertragungsverfahrens benutzt derart angepasst werden kann, dass die Form des abgestrahlten Bereichs optimal an die gegebene Struktur des Netzwerkes aus den Bodenstationen angepasst ist. Auch könne verschiedene Nah- und Fernbereiche ausgeleuchtet werden. Bei der Auswahl der Bodenstation, welche als nächster Kommunikationspartner bzw. als für das Luftfahrzeug zu versorgende Einheit gewählt werden soll, kann ein Mechanismus angewandt werden, welcher die Bodenstation mit der besten Kombination aus Handover-Intervall, Dopplereinfluss, Signalverlust, Interferenz und verfügbarer Bandbreite auswählt.

Mit anderen Worten Anpassen ist gezeigt wie eine Sendekeule der gerichteten Antenne auf Basis zumindest einer der beiden Parameter Flugbahn des Luftfahrzeuges und Position der Bodenstation angepasst wird.

Fig. 4 zeigt ein Luftfahrzeug 100, welches im Querschnitt dargestellt ist und einen Rumpf 104 aufweist. Dabei ist analog zu Fig. 2 eine spiegelsymmetrische Positionierung zweier gerichteter Antennen 103 und 105 gezeigt. Dabei sind ein oberer Grenzwinkel 400 und ein unterer Grenzwinkel 401 der Sendekeulen der beiden Antennen dargestellt. Auf Grund der Tatsache, dass es sich um gerichtete Antennen handelt und auf Grund der gewählten Ausrichtung der Antennen ergibt sich ein nicht ausgeleuchteter Bereich 402, welcher sich entlang der Flugbahn 302 des Luftfahrzeuges am Boden erstreckt. Weiterhin ist eine Hauptstrahlrichtung 403 gezeigt. Dies hat den Vorteil, dass die Winkeländerungsgeschwindigkeit bei der horizontalen Verfolgung des Luftfahrzeuges durch die Sendekeule der dritten Antenne der ersten Bodenstation einen bestimmten Maximalwert nicht überschreitet. Dieses besondere Merkmal des Verfahrens hat nun wiederum den vorteilhaften Effekt, das vereinfachte "Beam Steering"-Mechanismen für erste Bodenstation ermöglicht.

Fig 5 zeigt ein Kommunikationssystem 300 mit einem Luftfahrzeug 100, welches gleichzeitig mittels des erfindungsgemäßen Verfahrens mit zwei Bodenstationen 102 und 500 kommuniziert. Es ist dabei der nicht oder nur bedingt ausleuchtbare Bereich 402, der sich entlang der Flugbahn 302 unterhalb des Luftfahrzeuges 100 erstreckt dargestellt. Dieser Bereich endet in einem Abstand 503 quer zur Flugrichtung. Dieser Abstand beschreibt gleichzeitig die Nahposition, an welcher der ausgeleuchtete Bereich beginnt. Dieser Bereich wiederum endet in diesem Ausführungsbeispiel bei der Fernposition, welche durch den Abstand 504 definiert ist. Dabei natürlich auch falls gewünscht rechts und links der Flugbahn unterschiedlich große und unterschiedlich geformte Bereiche von dem Luftfahrzeug ausgeleuchtet werden.

Fig. 6 zeigt ein Kommunikationssystem 300 in welchem drei Luftfahrzeuge 100, 600 und 601 zeitgleich mit zwei Bodenstationen gemäß einem Ausführungsbeispiel der Erfindung ein Verfahren zur gerichteten digitalen Datenübertragung verwenden. Dabei werden mittels gerichteter Antennen digitale Daten direkt zwischen den Luftfahrzeug und den Bodenstation übermittelt, wobei die jeweiligen Sendekeulen der gerichteten Antennen auf Basis der jeweiligen Flugbahn des Luftfahrzeuges angepasst werden. Dies geschieht mit Hinblick auf zumindest einen der Parameter, der ausgewählt ist aus der Gruppe bestehend aus Fluggeschwindigkeit des Luftfahrzeuges, Einfluss zumindest einer Dopplerverschiebung, Signalverluste, Interferenzen, und verfügbare Bandbreite.

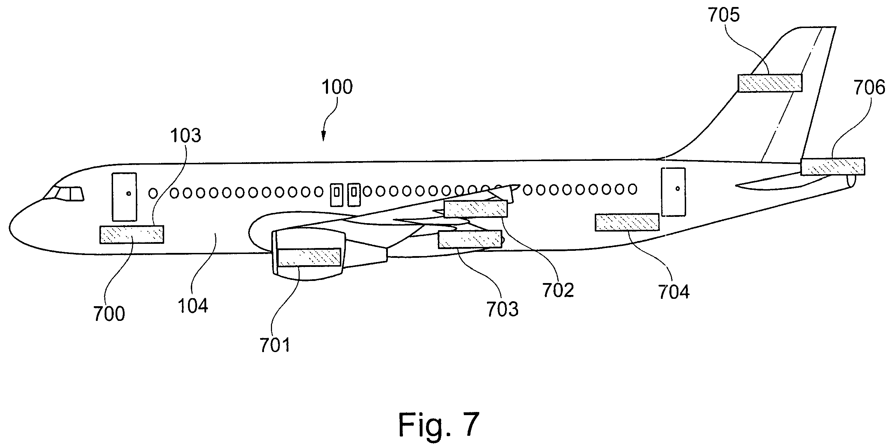

Fig. 7 zeigt ein Flugzeug, an welchem verschiedene Einbauorte 700 bis 706 am Flugzeug für die gerichtete Antenne gezeigt sind, um die bisher beschriebenen Vorteile der Erfindung zu erreichen. Beispielsweise kann die gerichtete erste Antenne 103 in der lateralen Position 700 und 704 an dem Rumpf 104 des Flugzeuges angeordnet sein. Gleichzeitig oder alternativ ist eine Platzierung der Antenne an der Triebwerksgondel 701, an dem Flügel 702, an einem sogenannten Belly-Fairing 703, an dem Seitenleitwerk 705 und/oder an dem Höhenleitwerk 706 möglich.

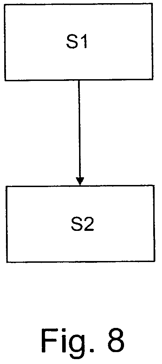

Fig. 8 zeigt ein Flussdiagramm eines Verfahrens. Dabei weist das Verfahren den ersten Schritt S1, Bereitstellen einer ersten und einer zweiten gerichteten Antenne für ein Luftfahrzeug und einer dritten Antenne für eine erste Bodenstation. Das Verfahren weist daneben den zweiten Schritt S2, Übermitteln digitaler Daten direkt zwischen dem Luftfahrzeug und der ersten Bodenstation, auf.

Ergänzend sei darauf hingewiesen, dass "umfassend" und "aufweisend:" keine anderen Elemente oder Schritte ausschließen und "eine" oder "ein" keine Vielzahl ausschließen. Ferner sei daraufhingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind explizit nicht als Einschränkung anzusehen.

## Patentansprüche

1. Verfahren zur gerichteten digitalen Datenübertragung zwischen einem Luftfahrzeug (100) und zumindest einer ersten Bodenstation (102) mittels eines Boden-Luft Direktfunksystems, das Verfahren aufweisend die Schritte:
Bereitstellen einer ersten Antenne (103) und einer zweiten Antenne (105) für das Luftfahrzeug (100), die als gerichtete Antennen (103, 105) ausgeführt sind,
wobei die erste Antenne (103) und die zweite Antenne (105) spiegelsymmetrisch zueinander hinsichtlich einer rumpfmittigen Spiegelachse (107) des Rumpfes (104) des Luftfahrzeugs (100) angeordnet sind,
wobei die erste Antenne (103) eine Länge und eine Breite aufweist,
wobei das Verhältnis von der Länge zu der Breite der ersten Antenne (103) größer als 1 ist,
wobei die erste Antenne (103) eine Längsachse aufweist, die in derselben Richtung wie die Längsachse des Flugzeugs verläuft,
das Verfahren weiterhin aufweisend die Schritte
räumliches Ausrichten der ersten gerichteten Antenne an dem Luftfahrzeug, wobei das räumliche Ausrichten derart erfolgt, dass ein von einer Sendekeule der gerichteten Antenne nicht ausgeleuchteter Bereich (402) entsteht, welcher sich entlang der Flugbahn des Luftfahrzeuges am Boden erstreckt;Bereitstellen einer dritten Antenne (303) an der ersten Bodenstation (102); und
Übermitteln digitaler Daten direkt zwischen dem Luftfahrzeug (100) und der ersten Bodenstation (102);
Fortlaufendes Messen einer Veränderung einer Stärke eines von der ersten Antenne empfangenen Signals der dritten Antenne während des Fluges des Luftfahrzeugs; und
Anpassung einer Sendekeule der ersten Antenne auf Basis der gemessenen Veränderung der Stärke des Signals.

2. Verfahren gemäß Anspruch 1, wobei die dritte Antenne (303) als gerichtete Antenne ausgeführt ist.

3. Verfahren gemäß Anspruch 1 oder 2, das Verfahren weiterhin aufweisend den Schritt:
Anpassen einer Sendekeule einer gerichteten Antenne auf Basis zumindest einer der beiden Parameter Flugbahn des Luftfahrzeuges und Position der Bodenstation.

4. Verfahren gemäß Anspruch 3,
wobei das Anpassen der Sendekeule mittels eines Algorithmus ausgeführt wird; und
wobei das Anpassen auf Basis zumindest eines Parameters erfolgt, der ausgewählt ist aus der Gruppe bestehend aus: Fluggeschwindigkeit des Luftfahrzeuges, Einfluss zumindest einer Dopplerverschiebung, Signalverluste, Interferenzen zwischen verschiedenen Teilnehmern in dem Funksystem, und verfügbare Bandbreite.

5. Verfahren gemäß Anspruch 3 oder 4,
das Verfahren weiterhin aufweisend den Schritt:
Anpassen einer Sendekeule der ersten und der dritten Antenne;
wobei das Anpassen derart erfolgt, dass im Flug des Luftfahrzeuges sowohl eine Hauptstrahlrichtung der ersten Antenne des Luftfahrzeuges auf die erste Bodenstation gerichtet bleibt und gleichzeitig eine Hauptstrahlrichtung der dritten Antenne der ersten Bodenstation auf das Luftfahrzeug gerichtet bleibt.

6. Verfahren gemäß einem der vorherigen Ansprüche,
wobei die erste bzw. zweite Antenne an einem Einbauort am Flugzeug angeordnet wird, der ausgewählt ist aus der Gruppe bestehend aus lateral am Rupf des Luftfahrzeuges, an einem Seitenleitwerk, an einem Höhenleitwerk, an einem Flügel, an einer Triebwerksgondel, und an einer Bauchverkleidung, die den Übergang zwischen einer Tragfläche und einem Rumpf des Luftfahrzeuges aerodynamisch verkleidet.

7. Verfahren gemäß einem der vorherigen Ansprüche, weiterhin aufweisend die folgenden Schritte:
Empfangen eines Signals der ersten Bodenstation durch die erste Antenne,
Empfangen eines weiteren Signals zumindest einer zweiten Bodenstation durch die erste Antenne, und
Auswählen einer der beiden Bodenstationen durch eine Auswahleinheit des Luftfahrzeuges für die Übertragung digitaler Daten auf Basis zumindest eines Parameters ausgewählt aus der Gruppe bestehend aus: Handover-Intervall; Einfluss zumindest einer Dopplerverschiebung; Signalverluste; Interferenz; und verfügbare Bandbreite.

8. Verfahren gemäß einem der vorherigen Ansprüche, weiterhin aufweisend den folgenden Schritt:
Ausführen eines Handovers zwischen der ersten Bodenstation und einer zweiten Bodenstation.

9. Verfahren gemäß einem der vorherigen Ansprüche, weiterhin aufweisend den folgenden Schritt:
Anpassen einer Sendekeule der ersten Antenne an eine zweite Bodenstation während und/oder nach einem durchgeführten Handover.

10. Luftfahrzeug (100) mit einer digitalen Sendeeinheit (101) zur gerichteten digitalen Datenübertragung zwischen dem im Flug befindlichen Luftfahrzeug und zumindest einer ersten Bodenstation (102) in einem Boden-Luft Direktfunksystem, die digitale Sendeeinheit aufweisend:
eine erste Antenne (103) und eine zweite Antenne (105) zum zumindest Abstrahlen von Signalen zur digitalen Datenübertragung direkt an die Bodenstation, und
eine Kontrolleinheit;
wobei die erste Antenne und die zweite Antenne als gerichtete Antennen ausgebildet sind;
wobei die erste Antenne (103) zur Anbringung an einem Einbauort angeordnet ist, der ausgewählt ist aus der Gruppe bestehend aus lateral an einem Rumpf (104) des Luftfahrzeuges, an einem Seitenleitwerk (705), an einem Höhenleitwerk (706), an einem Flügel (702), an einer Triebwerksgondel (701), und an einer Bauchverkleidung (703), die den Übergang zwischen einer Tragfläche und dem Rumpf des Luftfahrzeuges aerodynamisch verkleidet; und
die zweite Antenne spiegelsymmetrisch (106) zur ersten Antenne im Hinblick auf eine rumpfmittige Spiegelachse (107) angeordnet ist;
wobei die erste Antenne (103) eine Länge und eine Breite aufweist,
wobei das Verhältnis von der Länge zu der Breite der ersten Antenne (103) größer als 1 ist,
wobei die erste Antenne (103) eine Längsachse aufweist, die ein derselben Richtung wie die Längsachse des Flugzeugs verläuft,
wobei die erste Antenne (103) derart räumlich an dem Luftfahrzeug ausgerichtet ist, dass ein von einer Sendekeule der ersten Antenne nicht ausgeleuchteter Bereich (402) entsteht, welcher sich entlang der Flugbahn des Luftfahrzeuges am Boden erstreckt,
wobei die Kontrolleinheit dazu ausgeführt ist, eine Sendekeule der ersten Antenne anzupassen,
wobei die Anpassung der Sendekeule der ersten Antenne auf Basis einer fortlaufenden Messung einer Veränderung der Stärke eines von der ersten Antenne empfangenen Signals einer dritten Antenne einer Bodenstation erfolgt.

11. Luftfahrzeug gemäß Anspruch 10,
wobei ein Rumpf des Luftfahrzeuges einen himmelwärts gewandten Bereich (108) und einen bodenwärts gewandten Bereich (109) aufweist;
wobei die erste Antenne unter einem Winkel α (110) zu einer Flächennormalen (111) des himmelwärts gewandten Bereichs hin an dem Rumpf des Luftfahrzeuges angeordnet ist, welcher Winkel α ausgewählt ist aus der Gruppe bestehend aus 80° ≤ α ≤ 145°; 95° ≤ α ≤165°; 100° ≤ α ≤ 155°; 105° ≤ α ≤ 140°; 115° ≤ α ≤130°; 280° ≤ α ≤185°; 265° ≤ α ≤ 195°; 260° ≤ α ≤205°; 255 ≤ α ≤ 220°; und 245° ≤ α ≤ 230°.

12. Luftfahrzeug gemäß einem der Ansprüche 10 oder 11, die Sendeinheit weiterhin aufweisend:
eine elektrische Kontrolleinheit (112) zur Anpassung einer Sendekeule (304) der ersten Antenne auf Basis einer Flugbahn (302) des Luftfahrzeuges.

13. Luftfahrzeug gemäß Anspruch 12, die Sendeinheit weiterhin aufweisend:
einen Speicher (113);
wobei in dem Speicher zumindest ein erster Algorithmus gespeichert ist, mittels dessen die Kontrolleinheit die Anpassung der Sendekeule durchführt oder ein zweiter Algorithmus gespeichert ist, mittels dessen die Kontrolleinheit ein Handover durchführt.

14. Kommunikationssystem (300) zur gerichteten digitalen Datenübertragung zwischen einem Luftfahrzeug (100) und zumindest einer ersten Bodenstation (102); das Kommunikationssystem aufweisend:
eine erste digitale Sendeeinheit (101) an dem Luftfahrzeug, welche aufweist:
eine erste Antenne (103) und eine zweite Antenne (105) zum zumindest Abstrahlen von Signalen zur digitalen Datenübertragung direkt an die Bodenstation;
eine Kontrolleinheit;
wobei die erste Antenne und die zweite Antenne als gerichtete Antennen ausgebildet sind;
wobei die erste Antenne (103) zur Anbringung an einem Einbauort angeordnet ist, der ausgewählt ist aus der Gruppe bestehend aus lateral an einem Rumpf (104) des Luftfahrzeuges, an einem Seitenleitwerk (705), an einem Höhenleitwerk (706), an einem Flügel (702), an einer Triebwerksgondel (701), und an einer Bauchverkleidung (703), die den Übergang zwischen einer Tragfläche und dem Rumpf des Luftfahrzeuges aerodynamisch verkleidet; und
die zweite Antenne spiegelsymmetrischen (106) zur ersten Antenne im Hinblick auf eine rumpfmittige Spiegelachse (107) angeordnet ist;
wobei die erste Antenne (103) eine Länge und eine Breite aufweist,
wobei das Verhältnis von der Länge zu der Breite der ersten Antenne (103) größer als 1 ist,
wobei die erste Antenne (103) eine Längsachse aufweist, die in derselben Richtung wie die Längsachse des Flugzeugs verläuft,
wobei die erste Antenne (103) derart ausgerichtet ist, dass ein von einer Sendekeule der ersten Antenne nicht ausgeleuchteter Bereich (402) entsteht, welcher sich entlang der Flugbahn des Luftfahrzeuges am Boden erstreckt,und eine zweite digitale Sendeinheit (301) an der ersten Bodenstation, welche eine dritte Antenne (303) aufweist;
wobei die Sendeinheiten zum Übermitteln digitaler Daten direkt zwischen dem Luftfahrzeug und der ersten Bodenstation ausgeführt sind;
wobei die Kontrolleinheit dazu ausgeführt ist, eine Sendekeule der ersten Antenne anzupassen,
wobei die Anpassung der Sendekeule der ersten Antenne auf Basis einer fortlaufenden Messung einer Veränderung der Stärke eines von der ersten Antenne empfangenen Signals der dritten Antenne erfolgt.

## Claims

1. Method for directional digital data transmission between an aircraft (100) and at least one first ground station (102) by a ground-to-air direct radio system, the method comprising the steps of:
providing a first antenna array (103) and a second antenna array (105) for the aircraft (100), the first and second antenna arrays (103, 105) being configured as directional antenna arrays;
wherein the first antenna array (103) and the second antenna array (105) are arranged in mirror symmetry relative to a mirror axis (107) in the middle of the fuselage (104) of the aircraft (100);
wherein the first antenna array (103) comprises a length and a width,
wherein a ratio between the length and the width of the first antenna array (103) is greater than 1,
wherein the first antenna array (103) comprises a longitudinal axis which is running in the same direction as the longitudinal axis of the aircraft,
the method further comprising the steps of
spatially aligning of the first antenna array (103) at the aircraft (100), wherein the spatially aligning takes place such that an area (402) arises, wherein the area (402) is not illuminated by a transmission lobe of the directed antenna array and wherein the area (402) extends along a trajectory of the aircraft (100) on ground;
providing a third antenna (303) at the first ground station (102); and
transmitting digital data directly between the aircraft (100) and the first ground station (102),
continuously measuring a change in strength of a signal of the third antenna (303) received by the first antenna (103) during the flight of the aircraft (100); and
adapting of a transmission lobe of the first antenna array (103) based on the measured change in strength of the signal.

2. Method according to claim 1, wherein the third antenna (303) is designed as a directional antenna array.

3. Method according to claim 1 or 2, the method further comprising the step of:
adapting a transmission lobe of a directional antenna array on the basis of at least one parameter selected from the group consisting of a trajectory of the aircraft and a position of the ground station.

4. Method according to claim 3,
wherein the adapting of the transmission lobe is executed by means of an algorithm; and
wherein the adaptation takes place on the basis of at least one parameter selected from the group consisting of flight speed of the aircraft, influence of at least one Doppler shift, signal loss, interference among various participants in the radio system, and available bandwidth.

5. Method according to claim 3 or 4,
the method further comprising the step of:
adapting a transmission lobe of the first antenna array and a transmission lobe of the third antenna;
wherein adaptation takes place in such a manner that when the aircraft is in flight a main beam direction of the first antenna array of the aircraft remains directed at the first ground station, and at the same time a main beam direction of the third antenna of the first ground station remains directed at the aircraft.

6. Method according to one of the preceding claims,
wherein the first and second antenna, respectively, is arranged at an installation location on the aircraft, which installation location is selected from the group including: laterally at the fuselage of the aircraft; at a vertical stabilizer; at a horizontal stabilizer; at a wing; at an engine nacelle; and at a belly fairing that aerodynamically covers the transition between an airfoil and a fuselage of the aircraft.

7. Method according to one of the preceding claims, further comprising the steps of:
receiving a signal from the first ground station by the first antenna array;
receiving a second signal from at least one second ground station by the first antenna array; and
selecting one of the two ground stations by a selection unit of the aircraft for the transmission of digital data on the basis of at least one parameter selected from the group consisting of: handover interval; influence of at least one Doppler shift; signal loss; interference; and available bandwidth.

8. Method according to one of the preceding claims, further comprising the following step of:
carrying out a handover process between the first ground station and a second ground station.

9. Method according to one of the preceding claims, further comprising the following step of:
adapting a transmission lobe of the first antenna array to a second ground station during and/or after a handover process.

10. Aircraft (100) comprising a digital transmitter unit (101) for directional digital data transmission between the aircraft in flight and at least one first ground station (102) in a ground-to-air direct radio system, the digital transmitter unit comprising:
a first antenna array (103) and a second antenna array (105) for at least emitting signals for digital data transmission directly to the ground station; and
a control unit;
wherein the first antenna array (103) and the second antenna array (105) are configured as directional antenna array; and
wherein the first antenna array (103) is configured for being affixed at an installation location selected from the group consisting of: laterally on a fuselage (104) of the aircraft; on a vertical stabilizer (705); on a horizontal stabilizer (706); on a wing (702); on an engine nacelle (701); and on a belly fairing (703) that aerodynamically covers the transition between an airfoil and a fuselage of the aircraft; and
wherein the second antenna array is arranged in a mirror-symmetrical manner (106) relative to the first antenna array with regard to a mirror axis (107) situated in the middle of the fuselage;
wherein the first antenna array (103) comprises a length and a width,
wherein a ratio between the length and the width of the first antenna array (103) is greater than 1,
wherein the first antenna array (103) comprises a longitudinal axis which is running in the same direction as the longitudinal axis of the aircraft (100),
wherein the first antenna array (103) is spatially aligned such that an area (402) arises, wherein the area (402) is not illuminated by a transmission lobe of the directed antenna array and wherein the area (402) extends along a trajectory of the aircraft (100) on ground;
wherein the control unit is configured to adapt a transmission lobe of the first antenna array,
wherein the adaption takes place based on a continuously measured change in strength of a signal of the third antenna (303) of a ground station received by the first antenna (103).

11. Aircraft (100) according to claim 10,
wherein a fuselage of the aircraft comprises a region (108) facing the sky, and a region (109) facing the ground;
wherein the first antenna array is arranged on the fuselage of the aircraft at an angle α relative to the mirror axis in the middle of the fuselage of the aircraft which angle α is selected from the group consisting of: 80° ≤ α ≤ 145°; 95° ≤ α ≤ 165°; 100° ≤ α ≤ 155°; 105° ≤ α ≤ 140°; 115° ≤ α ≤ 130°; 280° ≤ α ≤ 185°; 265° ≤ α ≤ 195°; 260° ≤ α ≤ 205°; 255° ≤ α ≤ 220°; and 245° ≤ α ≤ 230°.

12. Aircraft according to claim 10 or 11, the transmitter unit further comprising:
an electrical control unit (112) for adapting a transmission lobe (304) of the first antenna array on the basis of a trajectory (302) of the aircraft.

13. Aircraft according to claim 12, the transmitter unit further comprising:
a storage device (113);
wherein in the storage device at least one first algorithm is stored by means of which the control unit carries out adaptation of the transmission lobe, or a second algorithm is stored by means of which the control unit carries out a handover process.

14. Communication system (300) for directional digital data transmission between an aircraft (100) and at least one first ground station (102); the communication system comprising:
a first digital transmitter unit (101) on the aircraft comprising:
a first antenna array (103) and a second antenna array (105) for at least emitting signals for digital data transmission directly to the ground station;
a control unit;
wherein the first and the second antenna array are configured as directional antenna arrays;
wherein the first antenna array (103) is arranged for mounting at an installation location selected from the group consisting of: laterally at a fuselage (104) of the aircraft, at a vertical stabilizer (705), at a horizontal stabilizer (706), at a wing (702), at an engine nacelle (701), and at a belly fairing (703) that aerodynamically covers the transition between an airfoil and a fuselage of the aircraft;
wherein the second antenna array is arranged in mirror symmetry (106) to the first antenna array in respect of a mirror axis (107) in the middle of the fuselage;
wherein the first antenna array (103) comprises a length and a width,
wherein a ratio between the length and the width of the first antenna array (103) is greater than 1,
wherein the first antenna array (103) comprises a longitudinal axis which is running in the same direction as the longitudinal axis of the aircraft (100),
wherein the first antenna array (103) is aligned such that an area (402) arises, wherein the area (402) is not illuminated by a transmission lobe of the directed antenna array and wherein the area (402) extends along a trajectory of the aircraft (100) on ground,
and a second digital transmitter unit (301) at the first ground station comprising a third antenna;
wherein the transmitter units are configured to transmit digital data directly between the aircraft and the first ground station;
wherein the control unit is configured to adapt a transmission lobe of the first antenna array,
wherein the adaption takes place based on a continuously measured change in strength of a signal of the third antenna (303) of a ground station received by the first antenna (103).

## Revendications

1. Procédé pour la transmission directionnelle de données numériques entre un aéronef (100) et au moins une première station au sol (102) au moyen d'un système de diffusion directe sol-air, le procédé comprenant les étapes de :
la fourniture d'une première antenne (103) et d'une seconde antenne (105) pour l'aéronef (100), qui sont réalisées sous forme d'antennes (103, 105) directionnelles,
la première antenne (103) et la seconde antenne (105) étant disposées de manière symétrique l'une à l'autre par rapport à un axe de symétrie (107) au centre du fuselage du fuselage (104) de l'aéronef (100),
la première antenne (103) présentant une longueur et une largeur,
le rapport entre longueur et largeur de la première antenne (103) étant supérieur à 1,
la première antenne (103) présentant un axe longitudinal qui s'étend dans la même direction que l'axe longitudinal de l'aéronef,
le procédé présentant en outre les étapes suivantes :
l'orientation spatiale de la première antenne directionnelle au niveau de l'aéronef, l'orientation spatiale s'effectuant de telle sorte qu'il se crée une zone (402) non éclairée par un lobe d'émission de l'antenne directionnelle qui s'étend le long de la trajectoire de l'aéronef au sol ;
la fourniture d'une troisième antenne (303) au niveau de la première station au sol (102) ; et
la transmission de données numériques directement entre l'aéronef (100) et la première station au sol (102) ;
mesure en continu d'une variation d'une intensité d'un signal reçu par la première antenne de la troisième antenne pendant le vol de l'aéronef ; et
l'ajustement d'un lobe d'émission de la première antenne sur la base de la variation mesurée de l'intensité du signal.

2. Procédé selon la revendication 1, dans lequel la troisième antenne (303) est réalisée sous forme d'antenne directionnelle.

3. Procédé selon la revendication 1 ou 2, le procédé présentant en outre l'étape suivante :
l'ajustement d'un lobe d'émission d'une antenne directionnelle sur la base d'au moins un des deux paramètres trajectoire de l'aéronef et position de la station au sol.

4. Procédé selon la revendication 3,
dans lequel l'ajustement du lobe d'émission est réalisé au moyen d'un algorithme ; et
dans lequel l'ajustement s'effectue sur la base d'au moins un paramètre sélectionné parmi le groupe constitué de : vitesse de vol de l'aéronef, incidence d'au moins un décalage Doppler, pertes de signaux, interférences entre différents abonnés dans le système radio, et bande passante disponible.

5. Procédé selon la revendication 3 ou 4,
lequel le procédé présentant en outre l'étape suivante :
l'ajustement d'un lobe d'émission de la première et de la troisième antenne ;
dans lequel l'ajustement s'effectue de telle sorte que, pendant le vol de l'aéronef, à la fois une direction principale de propagation de la première antenne de l'aéronef reste dirigée vers la première station au sol et simultanément une direction principale de propagation de la troisième antenne de la première station au sol reste dirigée vers l'aéronef.

6. Procédé selon l'une des revendications précédentes, dans lequel la première, respectivement la seconde antenne étant disposée au niveau d'un emplacement sur l'avion sélectionné parmi le groupe constitué de :
latéralement au niveau du fuselage de l'aéronef, au niveau d'un empennage latéral, au niveau d'un empennage vertical, au niveau d'une aile, au niveau d'une nacelle de propulsion, et au niveau d'un carénage ventral qui couvre de manière aérodynamique la transition entre une surface porteuse et un fuselage de l'aéronef.

7. Procédé selon l'une des revendications précédentes, présentant en outre les étapes suivantes :
la réception d'un signal de la première station au sol par la première antenne,
la réception d'un autre signal d'au moins une seconde station au sol par la première antenne, et
la sélection d'une des deux stations au sol par une unité de sélection de l'aéronef pour la transmission de données numériques sur la base d'au moins un paramètre sélectionné parmi le groupe constitué de : intervalle de transfert intercellulaire ; incidence d'au moins un décalage Doppler ; pertes de signaux ; interférences ; et bande passante disponible.

8. Procédé selon l'une des revendications précédentes, présentant en outre l'étape suivante :
la réalisation d'un transfert intercellulaire entre la première station au sol et une seconde station au sol.

9. Procédé selon l'une des revendications précédentes, présentant en outre l'étape suivante :
l'ajustement d'un lobe d'émission de la première antenne à une seconde station au sol pendant et/ou après un transfert intercellulaire effectué.

10. Aéronef (100) comportant une unité d'émission numérique (101) pour la transmission directionnelle de données numériques entre l'aéronef se trouvant en vol et au moins une première station au sol (102) dans un système de diffusion directe sol-air, l'unité d'émission numérique présentant :
une première antenne (103) et une seconde antenne (105) pour au émettre des signaux pour transmettre des données numériques directement à la station au sol, et
une unité de commande ;
dans lequel la première antenne et la seconde antenne sont réalisées sous forme d'antennes directionnelles ;
dans lequel la première antenne (103) est disposée pour être installée au niveau d'un emplacement de montage sélectionné parmi le groupe constitué de : latéralement au niveau d'un fuselage (104) de l'aéronef, au niveau d'un empennage latéral (705), au niveau d'un empennage vertical (706), au niveau d'une aile (702), au niveau d'une nacelle de propulsion (701), et au niveau d'un carénage ventral (703) qui couvre de manière aérodynamique la transition entre une surface porteuse et le fuselage de l'aéronef ; et
dans lequel la seconde antenne est disposée de manière symétrique (106) à la première antenne par rapport à un axe de symétrie (107) au centre du fuselage ;
dans lequel la première antenne (103) présene une longueur et une largeur,
dans lequel le rapport entre longueur et largeur de la première antenne (103) est supérieur à 1,
dans lequel la première antenne (103) présente un axe longitudinal qui s'étend dans la même direction que l'axe longitudinal de l'aéronef,
dans lequel la première antenne (103) est orientée spatialement de telle manière au niveau de l'aéronef qu'il se crée une zone (402) non éclairée par un lobe d'émission de la première antenne qui s'étend le long de la trajectoire de l'aéronef au sol,
dans lequel l'unité de commande est conçue pour ajuster un lobe d'émission de la première antenne,
dans lequel l'ajustement du lobe d'émission de la première antenne est effectué sur la base d'une mesure en continu d'une variation de l'intensité d'un signal reçu par la première antenne d'une troisième antenne d'une station au sol.

11. Aéronef selon la revendication 10,
dans lequel un fuselage de l'aéronef présente une zone (108) tournée vers le ciel et une zone (109) tournée vers le sol ;
dans lequel la première antenne est disposée selon un angle α (110) par rapport à une normale de surface (111) de la zone tournée vers le ciel au niveau du fuselage de l'aéronef, lequel angle α étant sélectionné parmi le groupe constitué de :
80° ≤ α ≤ 145° ; 95° ≤ α ≤ 165° ; 100° ≤ α ≤ 155° ; 105° ≤ α ≤ 140° ; 115° ≤ α ≤ 130° ; 280° ≤ α ≤ 185° ; 265° ≤ α ≤ 195° ; 260° ≤ α ≤ 205° ; 255° ≤ α ≤ 220° ; et 245° ≤ α ≤ 230°.

12. Aéronef selon l'une des revendications 10 ou 11, l'unité d'émission présentant en outre :
une unité de commande électrique (112) destinée à ajuster un lobe d'émission (304) de la première antenne sur la base d'une trajectoire (302) de l'aéronef.

13. Aéronef selon la revendication 12, l'unité d'émission présentant en outre :
une mémoire (113) ;
dans lequel au moins un premier algorithme est enregistré dans la mémoire, au moyen duquel l'unité de commande effectue l'ajustement du lobe d'émission ou un second algorithme est enregistré, au moyen duquel l'unité de commande effectue un transfert intercellulaire.

14. Système de communication (300) pour la transmission directionnelle de données numériques entre un aéronef (100) et au moins une première station au sol (102) ;
le système de communication présentant :
une première unité d'émission numérique (101) au niveau de l'aéronef, qui présente :
une première antenne (103) et une seconde antenne (105) pour au moins émettre des signaux pour transmettre des données numériques directement à la station au sol ; une unité de commande ;
dans lequel la première antenne et la seconde antenne sont réalisées sous forme d'antennes directionnelles ; dans lequel la première antenne (103) est disposée pour être installée au niveau d'un emplacement de montage sélectionné parmi le groupe constitué de : latéralement au niveau d'un fuselage (104) de l'aéronef, au niveau d'un empennage latéral (705), d'un empennage vertical (706), d'une aile (702), d'une nacelle de propulsion (701), et d'un carénage ventral (703) qui couvre de manière aérodynamique la transition entre une surface porteuse et le fuselage de l'aéronef ; et
la seconde antenne est disposée de manière symétrique (106) à la première antenne par rapport à un axe de symétrie (107) au centre du fuselage ;
dans lequel la première antenne (103) présente une longueur et une largeur,
dans lequel le rapport entre longueur et largeur de la première antenne (103) est supérieur à 1,
dans lequel la première antenne (103) présente un axe longitudinal qui s'étend dans la même direction que l'axe longitudinal de l'aéronef,
dans lequel la première antenne (103) étant orientée de telle manière qu'il se crée une zone (402) non éclairée par un lobe d'émission de la première antenne qui s'étend le long de la trajectoire de l'aéronef au sol, et une seconde unité d'émission numérique (301) au niveau de la première station au sol qui présente une troisième antenne (303) ;
dans lequel les unités d'émission sont réalisées pour la transmission de données numériques directement entre l'aéronef et la première station au sol ;
dans lequel l'unité de commande est conçue pour ajuster un lobe d'émission de la première antenne,
dans lequel l'ajustement du lobe d'émission de la première antenne est effectuée sur la base d'une mesure en continu d'une variation de l'intensité d'un signal reçu par la première antenne de la troisième antenne.
